Europäisches Patentamt

(19) European Patent Office

Office européen des brevets

(11) Publication number: **0 106 452**
**B1**

(12) **EUROPEAN PATENT SPECIFICATION**

(45) Date of publication of patent specification: **21.10.87**

(21) Application number: **83304760.8**

(22) Date of filing: **17.08.83**

(51) Int. Cl.⁴: **A 01 D 34/46**

(54) Bottom blade mounting assembly for cylinder lawnmowers.

(30) Priority: **15.09.82 GB 8226251**

(43) Date of publication of application:
**25.04.84 Bulletin 84/17**

(45) Publication of the grant of the patent:
**21.10.87 Bulletin 87/43**

(84) Designated Contracting States:
**BE DE FR GB NL SE**

(56) References cited:
**FR-A-1 551 464**
**FR-A-2 107 140**
**FR-A-2 426 393**
**GB-A- 490 105**
**GB-A- 617 034**

(73) Proprietor: **Birmid Qualcast (Home & Garden
Equipment) Limited
Coleridge Street Sunnyhill
Derby DE3 7JT (GB)**

(72) Inventor: **Dawson, Frank c/o Birmid Qualcast
(Home & Garden Equipment) Ltd. Coleridge
Street
Sunnyhill Derby DE3 7JT (GB)**

(74) Representative: **Sanders, Peter Colin
Christopher et al
BROOKES & MARTIN High Holborn House 52/54
High Holborn
London WC1V 6SE (GB)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

# Description

This invention relates to a bottom blade mounting assembly for a cylinder lawn mower. In particular the invention relates to a shock absorbing suspension system for the bottom blade.

Manufacturers of cylinder lawn mowers are constantly seeking improved methods of reducing or avoiding damage to the cutting blades caused by stones or other solid objects becoming trapped between the cutting cylinder and the fixed bottom blade.

One previous proposal is described for example in our U.K. Patent 1 314 377, and consists of attaching the bottom blade to a cross-member of the mower frame assembly by means of leaf springs. This allows some movement of the blade away from the cutting cylinder to absorb shock impacts on the blade. Adjustment of the position of the bottom blade relative to the cylinder is achieved separately by attaching lever arms at each end of the blade, the lever arms being adjustable against respective compression springs.

In another proposal described in U.K. Patent 1 185 792, lever arms attached at each end of the bottom blade are free to pivot about an axis parallel to the axis of the cutting cylinder against the bias of a compression spring. With this prior arrangement the spring and the blade are disposed on opposite sides of the pivot axis, and the spring is closer to the pivot axis than the blade. This has a number of disadvantages. In particular the positioning of the spring close to the pivot axis means that a powerful spring is required to counteract even relatively small impact forces. Moreover adjustment of the position of the bottom blade is achieved by using the same compression springs to urge the lever arms against respective adjustable stops and again the closeness of the springs to the pivot axis prevents finely controlled adjustments being made.

In our French Patent FR—A—2,426,393 there is described an arrangement in which the bottom blade is carried by lever arms and in which adjustable take-up means for the blade are provided at a point spaced further from the pivot axis than the blade. This arrangement allows fine adjustment but has no provision for absorbing shock impacts on the blade.

An object of the present invention is to provide a simple but reliable bottom blade mounting assembly, permitting the use of a pivoted non-flexible fixed bottom blade in a cylinder lawnmower, capable of absorbing shock impacts without the need for exceptionally powerful springs, and further capable of providing fine adjustment of the position of the bottom blade relative to the cylinder.

In accordance with the present invention there is provided a bottom blade mounting assembly for a cylinder lawnmower, the assembly comprising a pair of lever arms secured to opposing ends of the bottom blade, one end of each arm being pivotable about a fixed axis to permit movement of the bottom blade toward and away from a cutting cylinder, the other end of each arm being connected to adjustable take-up means for positioning the bottom blade with respect to the cylinder, the take-up means being spaced further from the pivot axis than the blade, and characterised in that each take-up means is carried by a respective leaf spring which retain the blade in its on-cut position while absorbing shock impacts on the blade.

In this manner a compact suspension system is provided but with the spring force having greater leverage than the impact force about the pivot axis. This has the advantage of increasing the shock absorbing capacity of the system for a given spring force while also permitting a fine adjustment of the position of the bottom blade relative to the cutting cylinder.

The leaf springs are preferably retained within housings secured to respective opposed side plates of the mower frame. These side plates generally carry the bearings for the central shaft of the cutting cylinder, and in a preferred embodiment of the invention the bearing housings also serve as the housings for the leaf springs. In particular, each lever arm may be suspended from one end of a generally U-shaped leaf spring, the bearing assembly being located in a central portion of the housing and the leaf spring being retained by a peripheral flange of the housing. Preferably further stop means are provided to constrain or limit movement of the spring in the opposite direction, thereby preventing excessive deflection of the spring in response to an impact force.

Each take-up means preferably includes a screw threaded manually adjustable take-up member, the lever arms being slidably mounted on the respective take-up members and being biased by a compression spring against an enlarged head of the member. The threaded take-up member then screws into a nut secured to the leaf spring to adjust the position of the bottom blade.

In the accompanying drawings, by way of example only:—

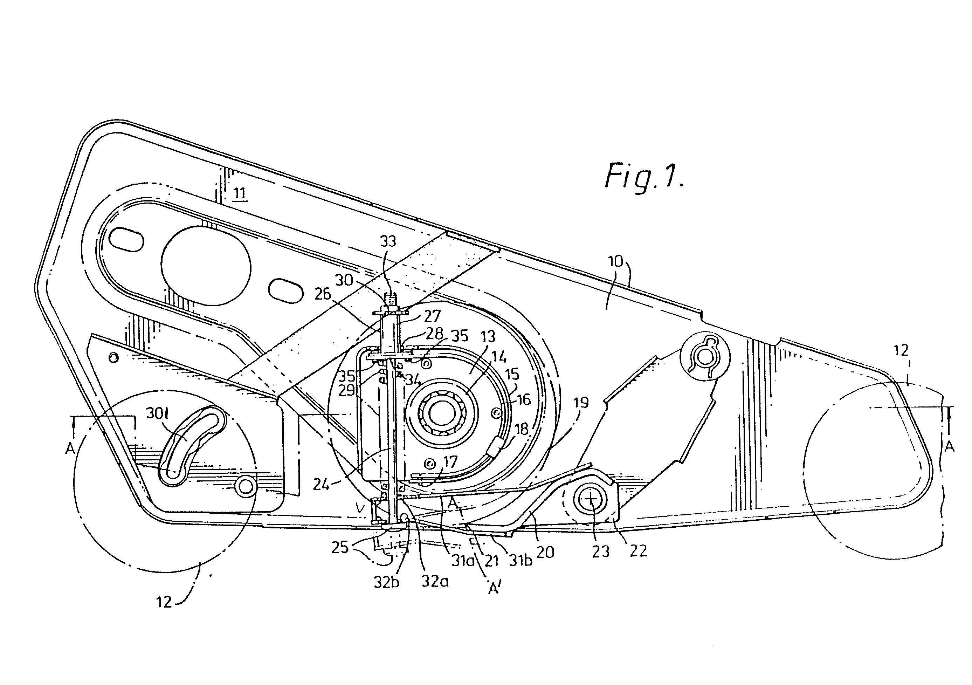

Figure 1 is a side elevation of the RH side plate of a cylinder mower and showing a bottom blade mounting assembly embodying the invention; and

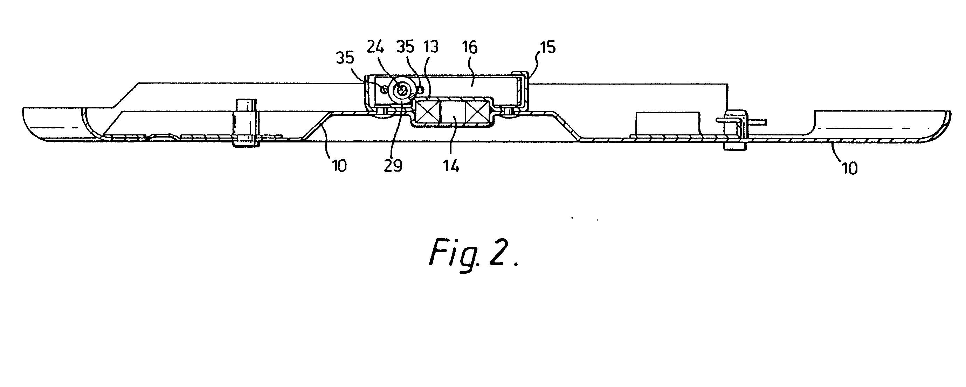

Figure 2 is a section on line A—A of Fig. 1.

The drawings illustrate the right hand one of a pair of opposed side plates 10 for attachment to the frame of a conventional cylinder lawn mower. In use, the mower has a front mounted motor (not shown) positioned at 11, and ejects its cuttings rearwardly into a collection box (not shown). It is supported on wheels 12, the side plate having an arcuate slot 301 to accommodate adjustment of the front wheel axis to vary the cutting height.

The following description refers specifically to the RH side plate but could apply equally to the LH side plate since both plates are provided with the same mounting assembly and shock absorbing system for the bottom blade.

Riveted to the side plate 10 is a housing 13 which incorporates a bearing 14 for rotatably mounting one end of the central shaft of a cutting cylinder 19. A U-shaped leaf spring 16 is curved around the inside face of an inwardly projecting retaining flange 15 of the housing 13, the spring 16 having a tang 17 projecting into an opening in the flange 15 to positively locate the spring and prevent it moving during use. The leaf spring is further retained by a bent-over tab 18 projecting from the flange 15.

A fixed bottom blade 20 co-operates with the cutting cylinder to mow the crop in a conventional manner.

The blade 20 is attached to a lever arm 22 rotatably mounted on a spindle 23 projecting inwardly from the side plate 10. When fully assembled, blade 20 is disposed with its cutting edge 21 generally tangential to the cutting cylinder 19 to provide a shear cutting action when the cylinder is rotated. The blade 20 is thus carried by a pair of lever arms 22 associated with the respective RH and LH side plates.

The lever arm 22 has inwardly projecting upper and lower flanges 31a, 31b, with respective aligned openings 32a, 32b at the front end of the arm for receiving the shank of a bolt 24. The end portion 33 of bolt 24 is threaded and screws into a T-nut 26, the nut being loosely secured to the free end 34 of the leaf spring 16 by studs 35 and protruding through an opening 28 in the retaining flange 15.

The spring 16 is pre-loaded during assembly to provide sufficient tension to retain the cutting edge 21 of the fixed blade 20 in its cutting position under normal loads. However, when a stone or other solid object becomes trapped between the cutting cylinder and the blade 20, the blade 20 is able to pivot away from the cylinder against the tension of the spring 16 with the cutting edge 21 following the path A—A' in a direction approximately normal to the generally tangential line of contact.

The T-nut includes a circular groove for receiving a circlip 30. The circlip 30 then serves as a limit stop to prevent excessive deflection of spring 16, the circlip being unable to pass through the opening 28 in flange 15.

In the drawings the normal cutting position of the blade 20 is shown in full outline while the displaced position is shown in dashed outline. The displaced position of the lever arm 22 is also partially shown in dashed outline.

The elastic deflections of the pre-loaded leaf springs 16 provides a minute clearance between the fixed and moving blades during cutting which reduces the noise of the mower.

A helical compression spring 29 urges the lever arm 22 against the head 25 of the bolt 24. Accordingly, when the threaded portion 33 of bolt 24 is screwed into the nut 26 against the bias of spring 29, the arm 22 is moved against spring 29 to adjust the position of the fixed blade 20 relative to the cutting cylinder 19. This position of the fixed blade is preset and further adjustment is normally required only when the blades have become worn.

The bolt 24, nut 26, spring 29, and lever arm 22 form a sub-assembly which is urged against the inside face of the retaining flange 15 by the leaf spring 16. This determines the working position of the sub-assembly on-cut.

During normal cutting, the sub-assembly remains essentially static. However, under a shock load such as a trapped stone, the whole sub-assembly moves against the tension of the leaf spring. When the stone or other obstacle has passed through or has been removed, the sub-assembly returns to its original on-cut position.

**Claims**

1. A bottom blade mounting assembly for a cylinder lawnmower, the assembly comprising a pair of lever arms (22) secured to opposing ends of the bottom blade (20), one end of each arm (22) being pivotable about a fixed axis to permit movement of the bottom blade (20) toward and away from a cutting cylinder (19), the other end of each arm (22) being connected to adjustable take-up means (24, 25, 29) for positioning the bottom blade (20) with respect to the cylinder (19), the take-up means (24, 25, 29) being spaced further from the pivot axis than the blade, and characterised in that each take-up means (24, 26, 29) is carried by a respective leaf spring (16) which retain the blade in its on-cut position while absorbing shock impacts on the blade.

2. An assembly according to claim 1 in which each take-up means (24, 26, 29) includes a manually adjustable take-up member (24) connecting each arm (22) to respective components (26) carried by the leaf springs (16).

3. An assembly according to claim 2 in which each component (26) includes a screw thread for receiving a screw threaded portion (33) of the take-up member (24).

4. An assembly according to claim 2 or claim 3 in which each arm (22) is slidably mounted on the respective take-up member (24) and is resiliently biased against an enlarged head (25) of the take-up member.

5. An assembly according to any one of the preceding claims in which each leaf spring (16) is retained against a fixed stop (15), and in which further stop means (35) limit movement of the take-up means (24, 26, 29) away from the respective fixed stops (15) against the bias of the leaf springs (16).

6. An assembly according to any one of the preceding claims in which the leaf springs (16) are generally U-shaped and are retained within housings (13) secured to respective opposed side plates (10) of the mower frame.

7. An assembly according to claim 6 in which the said housings (10) further house the respective bearing assemblies (14) for rotatably mounting opposite ends of a central shaft carrying the cutting cylinder (19).

8. An assembly according to claim 7 in which

0 106 452

each bearing assembly (14) is located in a central portion of the housing (13), and the respective leaf springs (16) are retained by a peripheral flange (15) of the housing.

**Patentansprüche**

1. Untermesserbefestigungsbaugruppe für einen Zylinderrasenmäher, die ein Paar Hebelstangen (22) umfaßt, die an entgegengesetzten Enden des Untermessers (20) befestigt sind, wobei ein Ende jeder Hebelstange (22) um eine feste Achse schwenkbar ist, um Bewegung des Untermessers (20) auf einen Schneidzylinder (19) zu und von diesem weg zu gestatten, und das andere Ende jeder Hebelstange (22) mit einer einstellbaren Nachstelleinrichtung (24, 26, 29) zum Positionieren des Untermessers (20) in bezug auf den Zylinder (19) verbunden ist, und die Nachstelleinrichtung (24, 26, 29) weiter von der Schwenkachse beabstandet ist als das Messer, dadurch gekennzeichnet, daß jede Nachstelleinrichtung (24, 26, 29) von einer entsprechenden Blattfeder (16) getragen wird, die das Messer in seiner Schneidstellung festhält, während sie auf das Messer einwirkende Stöße absorbiert.

2. Baugruppe nach Anspruch 1, bei der jede Nachstelleinrichtung (24, 26, 29) ein manuell einstellbares Nachstellglied (24) umfaßt, das jede Hebelstange (22) mit entsprechenden von den Blattfedern (16) getragenen Bauteilen (26) verbindet.

3. Baugruppe nach Anspruch 2, bei der jedes Bauteil (26) ein Schraubengewinde zur Aufnahme eines mit Schraubengewinde versehenen Abschnittes (33) des Nachstellgliedes (24) enthält.

4. Baugruppe nach Anspruch 2 oder 3, bei der jede Hebelstange (22) gleitfähig auf dem entsprechenden Nachstellglied (24) angebracht ist und durch Federkraft gegen einen Vergrößerten Kopf (25) des Nachstellgliedes vorgespannt ist.

5. Baugruppe nach einem der vorhergehenden Ansprüche, bei der jede Blattfeder (16) gegen einen festen Anschlag (15) festgehalten wird und bei der weitere Anschlageinrichtungen (35) die Bewegung der Nachstelleinrichtung (24, 26, 29) weg von den entsprechenden festen Anschlägen (15) gegen die Vorspannung der Blattfedern (16) begrenzen.

6. Baugruppe nach einem der vorhergehenden Ansprüche, bei der die Blattfedern (16) im wesentlichen U-förmig sind und innerhalb von Gehäusen (13) festgehalten werden, die an entsprechenden gegenüberliegenden Seitenplatten (10) des Mäherrahmens befestigt sind.

7. Baugruppe nach Anspruch 6, bei der diese Gehäuse (13) außerdem die entsprechenden Lagerbauteile (14) für die rotationsfähige Anbringung entgegengesetzter Enden einer Mittelwelle, die den Schneidzylinder (19) trägt, einschließt.

8. Baugruppe nach Anspruch 7, bei der jedes Lagerbauteil (14) in einem Mittelabschnitt des Gehäuses (13) angeordnet ist und die entsprechenden Blattfedern (16) durch einen am Umfang befindlichen Flansch (15) des Gehäuses festgehalten werden.

**Revendications**

1. Dispositif de montage de la lame inférieure pour une tondeuse à gazon à tambour, ce dispositif comprenant une paire de bras de levier (22) fixés sur des extrémités opposées de la lame inférieure (20), une extrémité de chaque bras (22) pouvant pivoter autour d'un axe fixe de façon à permettre à la lame inférieure (20) de se rapprocher et s'éloigner d'un tambour de coupe (19), l'autre extrémité de chaque bras (22) étant reliée à des moyens réglables de rattrapage de jeu (24, 26, 29) permettant de positionner la lame inférieure (20) par rapport au tambour (19), ces moyens de rattrapage de jeu (24, 26, 29) étant plus éloignés de l'axe de pivotement que la lame, et caractérisé en ce que chaque moyen de rattrapage de jeu (24, 26, 29) est porté par un ressort à lame associé (16) qui retient la lame de coupe dans sa position de coupe tout an absorbant les chocs à l'impact sur cette lame.

2. Dispositif selon la revendication 1, dans lequel chaque moyen de rattrapage de jeu (24, 26, 29) comprend une pièce de rattrapage de jeu (24) réglable manuellement et reliant chaque bras (22) à des éléments respectifs (26) portés par les ressorts à lame (16).

3. Dispositif selon la revendication 2, dans lequel chaque élément (26) comprend un filetage destiné à recevoir une partie filetée (33) de la pièce de rattrapage de jeu (24).

4. Dispositif selon la revendication 2 ou la revendication 3, dans lequel chaque bras (22) est moné de manière coulissante sur la pièce associée de rattrapage de jeu (24) et est soumis à une sollicitation élastique l'applicant contre une tête plus large (25) de cette pièce de rattrapage de jeu.

5. Dispositif selon l'une quelconque des revendications précédentes, dans lequel chaque ressort à lame (16) est maintenu contre une butée fixe (15) et dans lequel d'autres moyens de butée (35) limitent un déplacement des moyens de rattrapage de jeu (24, 26, 29), les éloignant des butées fixes associées (15) à l'encontre de la sollicitation élastique des ressorts à lame (16).

6. Dispositif selon l'une quelconque des revendications précédentes, dans lequel les ressorts à lame (16) sont en forme générale de U et sont retenus à l'intérieur de logements (13) solidaires de plaques latérales opposées associées (10) du bâti de la tondeuse.

7. Dispositif selon la revendication 6, dans lequel lesdits logements (13) servent en outre à loger les ensembles-paliers respectifs (14) destinés à monter de manière rotative des extrémités opposées d'un arbre central portant le tambour de coupe (19).

8. Dispositif selon la revendication 7, dans lequel chaque ensemble-palier (14) est disposé dans une partie centrale du logement (13) et les ressorts à lame respectifs (16) sont retenus par un rebord périphérique (15) de ce logement.

Fig.1.

Fig. 2.